# EUROPEAN PATENT SPECIFICATION

(11) **EP 1 834 126 B1**
(45) Date of publication and mention of the grant of the patent: **23.05.2012**
(21) Application number: 05725086.2
(22) Date of filing: 09.03.2005
(51) Int. Cl.: F16L 59/14, F16L 57/04, F16L 11/12

(54) **FIRE RESISTANT HOSE CONSTRUCTION**
FEUERFESTE SCHLAUCHKONSTRUKTION
CONSTRUCTION DE TUYAU SOUPLE RESISTANTE AU FEU

(30) Priority: 07.01.2005 US 642033 P
(43) Date of publication of application: 19.09.2007
(73) Proprietor: PARKER-HANNIFIN CORPORATION, Cleveland, Ohio 44124-4141 (US)
(72) Inventor: NANNEY, Shadrach, Mansfield, Texas 76063 (US); STROEMPL, Peter J,, Fort Worth, Texas 76137 (US)
(74) Representative: Albutt, Anthony John
(86) International application number: PCT/US2005/007726
(87) International publication number: WO 2006/073415

(56) References cited:
- GB-A- 1 178 852
- US-A- 4 137 949
- US-A- 4 675 221

## Description

### BACKGROUND OF THE INVENTION

The present invention relates broadly to hose constructions, and more particularly to a fire resistant construction which may find particular use in aerospace applications.

Fire resistant hose constructions of the type herein involved are used in a variety of instrumentation, control, sensing, and fluid transfer and/or power applications. Representative construction are shown, for example, in U.S. Patent Nos. 4,275,769; 4,675,221; and 4,942,903, and in the catalogues "Stratoflex 101 PTFE Lightweight, Enhanced Bend Radius Hose Products for the Aerospace Industry," Catalogue 106-101, August 2001, and "Stratoflex Fire Testing of Aerospace Hose," Catalogue 106-FR, June 2001, published by the Stratoflex Division of Parker Hannifin Corporation, Fort Worth, Texas.

In basic construction, hoses of the type herein involved typically are constructed as having a tubular, innermost core. In reinforced constructions, the core may be surrounded by one or more outer layers of a braided, spiral wound, or other metal, synthetic, or other fiber reinforcement. The reinforcement, in turn, may be protected by a one or more layers of a surrounding outermost sheath or cover which may function as a firesleeve and/or chafe guard.

The core tube, which may be a thermoplastic material molded or, more typically, extruded or co-extruded as the case may be, from one or more layers of one or more fluoropolymers materials, but alternatively may be extruded or otherwise formed of, or in combination with, one or more layers of a polyamide, polyolefin, polyvinyl chloride, ethylene vinyl alcohol, polyurethane, and/or a synthetic rubber material such as Buna N or neoprene. In some multi-layer tubing constructions, such as used for fuel line applications, a bonding or tie layer may be incorporated between an inner layer or liner which may be chemically-resistant, and a second layer of a stronger, tougher, and, typically, less-expensive material, such as a nylon, polyamide, or polyurethane, which is used as a reinforcement or cover for the liner. The tie layer, which may be formed as a co- or tri-extrusion with the liner and second layers, is formulated to be compatible chemically with both the material of the liner and the material of the second layer such that a thermal fusion bond may be achieved between the liner and tie layer and the tie layer and second layer to thereby consolidate the tubing into an integral structure. The use of such tie layers dictates the selection of specific materials for the liner and second layer so as to be compatible with the material of the tie layer, or vice versa, and is believed limited to the use of melt processible fluoropolymers such as polyvinylidene fluoride (PVDF) or ethylene tetrafluoroethylene (ETFE). Depending upon its material of construction, the tube may be cross-headed extruded on a mandrel for support, or otherwise supported in later forming operations using air pressure and/or reduced processing temperatures.

From the extruder, the tube may be collected on a reel or other take-up device for further processing. As dispensed from the reel or, in a continuous in-line process, taken directly from the extruder, the tube, which may be frozen or otherwise chilled, such as by being sprayed with a liquid and gaseous nitrogen mixture or the like to improve dimensional stability. The core tube then may be delivered through one or more braiders or winders which may be used to surround the tube with one or more reinforcement layers of a fibrous material such as a monofilament, yarn, or, typically, metal wire. The one or more reinforcement layers, which may be applied under tension and, in some constructions, bonded to the core tube via an adhesive layer which may be applied to the surface of the core tube prior to the braiding, spiral winding, or other formation of the reinforcement layers.

Following the formation of the one or more reinforcement layers, an outer sheath or cover, also termed a "firesleeve," may be integrally formed over the reinforcement layers as one or more layers of a cross-head extrusion and/or a spiral-wound wrapping. Such layers typically may comprise an ablative material such as a cross-linked silicone resin which optionally may be blended or otherwise compounded with a harder material, such as a thermoplastic polyurethane resin or the like, to provide increased abrasion resistance. The firesleeve alternatively may be formed in a separate operation, and then sleeved over the outermost reinforcement layer.

The firesleeve itself may be reinforced with one or more reinforcement layers, which again may be formed of a fibrous material such as a monofilament, yarn, or metal wire, and typically a fiberglass. These one or more reinforcement layers may be encapsulated or otherwise interposed between inner and outer resin layers which, as before, may comprise a cross-linked silicone resin or blend.

Hose constructions intended for certain aerospace applications, such as for fuel, lubrication, or hydraulic lines, must comply, in the U.S. and elsewhere, with various codes, standards, or other regulations, most commonly SAE Standard AS1055, "Fire Testing of Flexible Hose, Tube Assemblies, Coils, Fittings and Similar System Components." As a result, it is believed that hose constructions meeting, particularly, AS1055 would be well-received by the aerospace industry.

### BROAD STATEMENT OF THE INVENTION

The present invention is directed to flexible hose constructions, and particularly to a fire resistant construction. Such construction may find particular use in aerospace applications such as for fuel, lubrication, or hydraulic lines.

In an illustrative embodiment, the construction includes a tubular fluoropolymer or other core, a thermal insulation layer surrounding the core, one or more reinforcement layers surrounding the thermal insulation layer, and a firesleeve layer surrounding the one or more reinforcement layers. The thermal insulation layer is formed of a thermoplastic resin such as a polyimide having a melting temperature of at least about 300°C, and each of the reinforcement layers may be braided or otherwise formed of a metal wire.

Advantageously, the hose construction of the invention has been found to exhibit a flame class rating of "Class A" at 0 gallons per minute (0 liters per minute) flow and 1500 psig (10.3 MPa) pressure under SAE Standard AS1055, "Fire Testing of Flexible Hose, Tube Assemblies, Coils, Fittings and Similar System Components."

The present invention, accordingly, comprises the construction, combination of elements, and arrangement of components which are exemplified in the detailed disclosure to follow. Advantages of the present invention include a flexible hose construction which is particularly adapted for aerospace applications, and which is believed is in compliance with SAE Standard AS1055. Additional advantages include a hose construction which is economical to manufacture. These and other advantages will be readily apparent to those skilled in the art based upon the disclosure contained herein.

### BRIEF DESCRIPTION OF THE DRAWING

For a fuller understanding of the nature and objects of the invention, reference should be had to the following detailed description taken in connection with the accompanying drawing wherein:

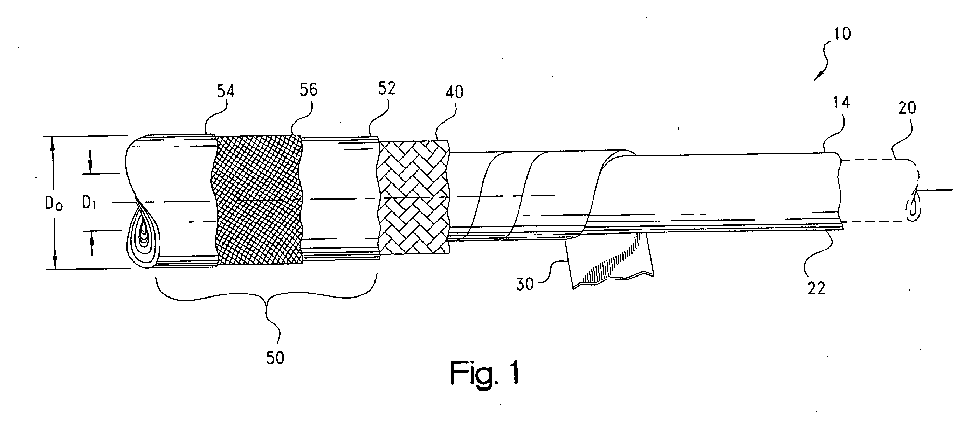

Fig. 1 is a side elevational, cut-away view of a representative embodiment of a hose construction in accordance with the present invention.

The drawing will be described further in connection with the following Detailed Description of the Invention.

### DETAILED DESCRIPTION OF THE INVENTION

Certain terminology may be employed in the description to follow for convenience rather than for any limiting purpose. For example, the terms "forward," "rearward," "right," "left," "upper," and "lower" designate directions in the drawings to which reference is made, with the terms "inward," "interior," "inner," or "inboard" and "outward," "exterior," "outer," or "outboard" referring, respectively, to directions toward and away from the center of the referenced element, and the terms "radial" or "horizontal" and "axial" or "vertical" referring, respectively, to directions, axes, planes perpendicular and parallel to the central longitudinal axis of the referenced element, and the terms "downstream" and "upstream" referring, respectively, to directions in and opposite that of fluid flow. Terminology of similar import other than the words specifically mentioned above likewise is to be considered as being used for purposes of convenience rather than in any limiting sense.

In the figure, elements having an alphanumeric designation may be referenced herein collectively or in the alternative, as will be apparent from context, by the numeric portion of the designation only. Further, the constituent parts of various elements in the figure may be designated with separate reference numerals which shall be understood to refer to that constituent part of the element and not the element as a whole. General references, along with references to spaces, surfaces, dimensions, and extents, may be designated with arrows.

For the purposes of the discourse to follow, the precepts of the hose construction of the invention herein involved are described in connection with a representative embodiment which is adapted particularly for use as a conduit for the aerospace installations such as for fuel, lubrication, or hydraulic lines. It will be appreciated, however, that aspects of the present invention may find use in other applications such as for instrumentation, control, sensing, and fluid transfer or power. Use within those such other applications therefore should be considered to be expressly within the scope of the present invention.

Referring then to the figure wherein corresponding reference numbers are used to designate corresponding elements, a representative fire-resistant flexible hose construction according to the present invention is shown generally at 10 in the cut-away view of Fig. 1. In basic dimensions, hose construction 10 extends axially to an indefinite length along a central longitudinal axis, 12, and in a radial direction circumferentially about axis 12 in defining a select inner and outer diameter referenced, respectively, at "Dᵢ" and "Dₒ." The inner and outer diameter dimensions may vary depending upon, for example, the pressure rating for the intended application, but generally may be between about 0.1-1.5 inch (0.254-3.81 cm) for inner diameter Dᵢ, and between about 0.35-2.5 inch (0.889-6.35 cm) for outer diameter Do, for a overall wall thickness therebetween of between about 0.125-0.5 inch (0.318-1.27 cm).

As may be seen in Fig. 1, hose 10 is constructed as being formed about a tubular core, referenced at 14. Core tube 14 may itself have an inner diameter of between about 0.1-1.5 inch (0.254-3.81 cm), and an outer diameter of between about 0.150-1.7 inch (0.381-4.32 cm) for a wall thickness therebetween of between about 0.025-0.1 inch (0.06-0.254 cm). However, and as with the overall dimensions of hose construction 10, the dimensions of the core tube 14 may vary with the particular application involved. Typically, the core tube 14 may be generally round in cross-section as shown, but alternatively may be of an elliptical, polygonal, or other geometric shape.

Core tube 14 may be provided as extruded, molded, or otherwise formed of a plastic or other polymeric resin which typically may be a thermoplastic. Suitable materials, along with copolymers and blends, mixtures, alloys, or other combinations thereof, include polyesters, polyvinyl chlorides, polyimides, polyurethanes, poly(ether ether ketone), polyetherimides, polybutylene and polyethylene terephthalates, polysulfones, polyacrylics, polymethylacrylates, polymethylmethacrylates, polycarbonates, poly(ester and ether urethanes), liquid crystal polymers (LCP), acetal homo and copolymers, polyolefins such as high density or molecular weight polyethylene and polyamides such as Nylon 12, and fluoropolymers, but as may be specifically selected for high or low temperature resistance, surface characteristics such as coefficient of friction, physical or mechanical properties such as flexural modulus, or, in the case of fluid transfer, chemical compatibility with the fluid being handled. Indeed, for many aerospace applications or other applications calling for chemical resistance, a fluoropolymer may be specified. Representative fluoropolymers include polytetrafluoroethylene (PTFE), fluorinated ethylene polypropylene (FEP) copolymer, perfluoroalkoxy (PFA) resin, polychlorotrifluoroethylene (PCTFE) copolymer, ethylenechlorotrifluoroethylene (ECTFE) copolymer, ethylene-tetrafluoroethylene (ETFE) terpolymer, polyvinylidene fluoride (PVDF), polyvinylfluoride (PVF), and copolymers and blends and other combination thereof. As used herein, "chemical resistance" should be understood to mean the ability to resist swelling, crazing, stress cracking, corrosion, or otherwise to withstand attack from mild acidic or alkaline solutions, phosphate-ester solutions, and alcohols and other organic solvents and hydrocarbons, as well as inorganic solvents such as water or brine. As mentioned the material forming the core tube 14 may be a homo or copolymer, or a combination thereof such as a blend of one or more homopolymers, one or more copolymers, or one or more homopolymers and one or more copolymers. Such materials each additionally may be admixed with other resins, which may be thermoplastic or thermosetting, such as to form an alloy, blend, mixture, or other combination, or a copolymer thereof.

Alternatively, core tube 14 may be formed of a resin which is a thermoplastic, i.e., melt-processible, synthetic rubber such as a chlorosulfonate, polybutadiene, butyl, neoprene, nitrile, polyisoprene, or buna-N, a copolymer rubber such as ethylene-propylene (EPR), ethylene-propylene-diene monomer (EPDM), nitrile-butadiene (NBR) or styrene-butadiene (SBR), or a blend such as ethylene or propylene-EPDM, EPR, or NBR, or a copolymer or blend of any of the foregoing. The term "synthetic rubbers" also should be understood to encompass materials which alternatively may be classified broadly as thermoplastic elastomers such as polyurethanes, silicones, fluorosilicones, styrene-isoprene-styrene (SIS), and styrene-butadiene-styrene (SBS), as well as other polymers which exhibit rubber-like properties such as plasticized nylons, polyesters, ethylene vinyl acetates, and polyvinyl chlorides.

The material forming core tube 14 may be compounded with one or more other fillers, and/or with modifiers or other additives. Such additives, which may be functional or inert, may be provided to be in liquid, powder, particulate, flake, fiber, or other form, and may include other electrically-conductive fillers, microwave-attenuating fillers, thermally-conductive fillers, lubricants such as molybdenum disulfide (MoS₂), wetting agents, surfactants, stabilizers, antioxidants, dispersants, pigments, dyes, and other colorants, colorings, or opacifying agents such as for coloring-coding of the tubing, luminescents, light reflectants, anti-static agents, coupling agents such as titanates, chain extending oils, tackifiers, flow modifiers, blowing agents, foaming or anti-foaming agents, reinforcements such as glass, carbon, or textile fibers, silanes, peroxides, film-reinforcing polymers and other agents, emulsifiers, thickeners, and/or flame retardants and other fillers such as aluminum trihydrate, antimony trioxide, metal oxides and salts, intercalated graphite particles, phosphate esters, decabromodiphenyl oxide, borates, siloxanes, phosphates, halogenated compounds, glass, silica, which may be fumed or crystalline, silicates, mica, ceramics, and glass or polymeric microspheres. Typically, the additives are blended or otherwise admixed with the base material, and may comprise between about 0.05% and 80% or more by total volume of the formulation.

Indeed, for many aerospace application, and particularly those involving fuel transfer, an electrically-conductive core tube 14 would be specified such as for static dissipation and/or electrical grounding. The resin forming the tube 14 thus may be filled with a carbon black or other electrically-conductive filler. As admixed with the black, the resin generally may form a binder into which the black filler may be dispersed. The black filler generally may included within the resin in a proportion sufficient to provide the level of electrical conductivity which is desired for the intended application. For many applications, a conductivity of 12µA @ 1000 VDC for the core tube 14 will be specified as in accordance with SAE Standard AS2078.

Core tube 14 also may be provided as having a multi-layer, i.e., two or more layer, laminate construction. Such laminate construction may include at least a first layer, which is shown in phantom at 20 to be the innermost layer, and an second layer, which is shown to be the outermost layer and is commonly referenced at 22 with the tube 14. In the illustrative embodiment of hose 10 depicted in Fig. 1, the second layer 22 may be concentric with and integrally adjoining the first layer 20. In alternative constructions, the layers 20 and 22 also may be reversed such that layer 20 forms the outermost layer and layer 22 forms the innermost layer. Additional layers also may be provided between the layers 20 and 22, and/or as surrounding or being surrounded by the layers 20 and 22.

The wall thicknesses of each of the layers 20 and 22, and of any other layers forming the core tube 14, may be of any thickness, both absolute and relative to the thickness of the other layers. For many applications, however, and as may be irrespective of which of the layers 20 and 22 is the innermost layer and which is the outermost layer, the first layer 20 may function as a liner as being relatively thin and formed of a fluoropolymer or other chemically resistant material, which as before may be filled or unfilled, with second layer 22 functioning as a support or backing as being relatively thick and formed of a less expensive, but stronger, more general purpose resin such as a polyamide, which also may be filled or unfilled. For cost and performance considerations, the wall thickness of the second layer 22 may comprises between about 70-80% of the overall thickness of the layers 20 and 22, with the wall thickness of the first layer 20 comprising between about 20-30% of such overall thickness, i.e., the wall thickness of the second layer 22 being about 1-10 times thicker than the thickness of the first layer 20.

To the extent formed of compatible resin materials, the layers 20 and 22 layers may be extruded, such as by being co-extruded or sequentially extruded, or otherwise formed as being cross-linked together or otherwise chemically or fusion bonded together directly at their interface into an integral, tubular composite, i.e., laminate structure. Alternatively, if formed of dissimilar or otherwise incompatible resin materials, an adhesion-promoting surface treatment may be applied between the interfacing surfaces thereof the layers 20 and 22. Alternatively, one or more intermediate tie or bonding layers may be co-extruded or otherwise interposed between the layers 20 and 22 as being formed of a material which is adhesion or fusion bond, or otherwise co-compatible with both the materials of layers 20 and 22. The wall thicknesses of such intermediate layer or layers typically will be less than or about equal to the wall thickness of the other layers. The use of tie layers is further described in U.S. Patent Nos. 3,561,493; 5,076,329; 5,167,259; 5,284,184; 5,383,087; 5,419,374; 5,460,771; 5,469,892; 5,500,257; 5,554,425; 5,566,720; 5,622,210; 5,678,611; 5,743,304; 6,390,141; 6,742,545; 6,807,988; 6,776,195; and in publication US 2004/0134555.

In accordance with the precepts of the present invention, at least one thermal insulation layer, 30, is provided to surround the core tube 14 for thermally insulating or other or otherwise protecting the core tube 14 in the event of a fire situation, and thereby assisting in maintaining the core tube 14 at temperature below the combustion temperature thereof. Thermal insulation layer 30 may be formed from one or more layers of a thermoplastic polymeric material which may be provided in the form of a tape or other film which may be spiral, i.e., helically, wrapped in an overlapping manner along axis 12 over the outer surface, 32, of the core tube 14 or over any intermediate layers which may be interposed therebetween. The thermal insulation layer alternatively may be longitudinally, i.e., "cigarette," wrapped over the core tube 14, or cross-head, co-extruded, or otherwise conventionally extruded over the core.

Depending upon, for example, the diametric extent of the tube 14, the tape or other form of the insulation layer or layers 30 each may have a thickness of between about 5-10 mils (0.127-0.254 mm). However, as the degree of fire resistance provided in the hose 10 by the one or more layers 30 will be generally proportional to the thicknesses of those layers, it should be understood that thicker layers or multiple thinner layers can be provided in the construction 10 to increase the fire resistance thereof. Indeed, flame resistance performances, such per SAE Standard AS1055, of 15 minutes or longer may be achieved using a thicker insulation layer 30, which may be either one or more thicker layers or a combination of two or more thinner layers which may be used to achieve a specified overall thickness. If in form of a tape, such tape may be between about 0.5-2.0 inch (1.3-5.0 cm) wide.

In whatever form provided, the thermoplastic resin material forming the insulation layer 30 may be unfilled or, alternatively, filled with one or more fillers and/or additives such as in the manner described hereinbefore in connection with the material forming the core tube 14. Suitable thermoplastic materials generally will include those materials classified as "engineering" thermoplastics, and particularly those materials, which may be homopolymers or copolymers, and which also may be blends, alloys, mixtures, or other combinations of two or more different materials, which may be further classified as "high temperature" materials as having a melting point of at least about 300°C. According to the invention, they comprise polyimides such as those marketed under the name Kapton® (E.I. DuPont de Nemours and Co., Wilmington, DE, USA). Other suitable thermoplastic materials in addition to polyimides include polysulfones, polyetheretherketones, and copolymers and combinations of such materials, and of such materials with other materials.

With continuing reference to the illustrative construction of hose 10 depicted in Fig. 1, one or more reinforcement layers, one of which is referenced at 40, may be provided as knitted, braided, woven, spiral, i.e., helically, or otherwise wound, and/or wrapped or otherwise formed to surround the insulation layer 30. Each of the reinforcement layers 40 may be formed of one or more filaments, which may be monofilaments, continuous multi-filament, i.e., yarn, stranded, cord, roving, thread, braid, tape, or ply, or short "staple" strands, of one or more fiber materials. The fiber material, which may be the same or different in each of the reinforcement layers which are provided, and which may be a blend, alloy, or other combination of two or more different materials in each layer, may be a natural or synthetic polymeric material such as a nylon, cotton, polyester, polyamide, aramid, polyolefin, polyvinyl alcohol (PVA), polyvinyl acetate, or polyphenylene bezobisoxazole (PBO), or blend or other combination thereof, or, particularly, a metal wire such as a steel, which may be galvanized or stainless or otherwise corrosion resistant (CRES), aluminum, nickel, copper, brass, or zinc or zinc-plated, or a blend, alloy, or other combination thereof.

With respect to the illustrative hose construction 10 shown in Figs 1, a single reinforcement layer 40, such as formed of a monofilament CRES steel or other metal wire, is shown to be braided about the insulation layer 30 as providing, for example, about a 100% coverage thereof. Such braiding may be effected, for example, under tension at a pitch angle of between about 45-63° and using from between 16-64 carriers each having from between about 1 to about 60 ends of the wire. The wire itself may have a nominal diameter of between about 5-40 mils (0.01-0.1 mm) and/or a tensile strength of between about 100,000-450,000 psi (690-3103 MPa). The tension and area coverage at which the reinforcement layer 40 may be braided may be varied to achieve the desired flexibility, which may be measured by bend radius, flexural forces, or the like, of the hose 10.

The outermost reinforcement layer or layers 40, in turn, may be sheathed within one or more layers of a coaxially-surrounding protective firesleeve, or other cover or jacket, referenced at generally at 50. Depending upon its construction, cover 50 may be integrally formed as spray-applied, dip coated, cross-head or co-extruded, or otherwise conventionally extruded, spiral or longitudinally, i.e., "cigarette," wrapped, or braided over the reinforcement layer 40, or otherwise separately formed and sheathed thereover. In either case, the cover 50 may include one or more layers, two of which are shown at 52 and 54. One or both of the layers 52 and 54, which may formed of the same or of different materials, formed of an ablative polymeric material, such as a cross-linked silicone resin, which may be a homopolymer or copolymer, or a blend, alloy, mixture, or other combination thereof. For example, a cross-linked silicone resin may be blended or otherwise compounded with a harder material, such as a thermoplastic polyurethane resin or the like, to provide increased abrasion resistance. The silicone resin or blend or other material forming the one or both of the layers 52 and 54 may be unfilled or filled with one or more fillers or additives such as a glass, fiberglass, mica, ceramic, or metal particulates.

The firesleeve 50 itself and/or the layer 52 and/or 54 themselves may be reinforced with one or more reinforcement layers, such as the layer 56 shown to be interposed between the layers 52 and 54, which may be knitted, braided, woven, spiral, i.e., helically, or otherwise wound, and/or wrapped or otherwise formed of a fibrous material such as a synthetic monofilament or yarn, or a metal wire, or typically, a fiberglass. The one or more reinforcement layers 56 may be encapsulated or otherwise interposed as shown between layers 52 and 54. With or without the one or more reinforcement layers 56, the firesleeve 50 may have a thickness of between about 0.05-0.2 inch (0.13-0.51 mm) as formed of the one or more layers 52 or 54, which each of the layers 52 and 54 having a thickness, independently, of between about 0.01-.15 inch (0.03-0.38 mm). If formed of chemically compatible materials, the respective layers 52 and 54 may be fusion bonded together at their interface. Alternatively, if formed of chemically incompatible materials, the respective layers 52 and 54 may be bonded together with an adhesive or by means of a surface treatment or tie layer (not shown) interposed therebetween, such as in the manner described hereinbefore in connection with the layers tube layers 20 and 22.

Although the illustrative fire-retardant hose construction 10 of Fig. 1 has been described wherein a thermal insulation layer 30 is employed as immediately adjacent the core tube 14, other constructions may be envisioned in view of the disclosure contained herein, and as dictated by the requirements of the particular application involved. For example, multiple layers of insulation layer 30 may be employed within the construction 10.

Thus, an illustrative fire-retardant flexible hose construction is described which is particularly adapted for aerospace applications. Such construction, which may be entirely thermoplastic, moreover, is economical to manufacture and may be adapted to a variety of uses such as for fuel, lubrication, or hydraulic lines.

The Example to follow, wherein all percentages and proportions are by weight unless otherwise expressly indicated, is illustrative of the practicing of the invention herein involved, but should not be construed in any limiting sense.

### EXAMPLE

Representative hose assemblies in accordance with the present invention were constructed for characterization. In such constructions, a 0.294 inch (0.75 mm) O.D. polytetrafluoroethylene tube having a(n) inside diameter of .212 inch (.54 mm) and a wall thickness of wall thickness of .041 inch (.10 mm), and being filled with about 2% by weight of carbon black having a particle size of about 18 nm (Monarch® 700, Cabot Corp., Boston, MA), was spiral wrapped with a 10 mil (0.03 mm) thick layer of a polyimide film (Kapton®, Dupont). The wrapped tube was given a standard braid of corrosion resistant stainless steel wire (CRES), and then covered with an integral firesleeve formed of a 0.120 inch (0.30 mm) layer of a cross-linked silicone resin (STI 20042-T BRNX, Dow Coming, Midland, MI) to form a nominal ¼-inch (6.35 mm) I.D.-size hose. The hose so constructed was fitted with compression-type, crimped on flare fittings to form a number of assemblies capable of passing pressure.

Such assemblies were fire tested in accordance with SAE Standard AS1055, "Fire Testing of Flexible Hose, Tube Assemblies, Coils, Fittings and Similar System Components." At 0 gallons per minute (0 liters per minute) flow and 1500 psig (10.3 MPa) pressure, the hose assemblies were observed to a flame class rating of "Class A" as exhibiting a time to failure of at least 5 minutes, with failure times in the range of about 400-500 seconds being typically observed.

The foregoing results confirm that the hose construction of the present invention is fire-resistant as exhibit a flame class rating of "Class A" at 0 gallons per minute (0 liters per minute) flow and 1500 psig (10.3 MPa) pressure under SAE Standard AS1055. Consequently, such hose is believed to be suitable for use in those aerospace applications and in such other applications which specify compliance with such standard.

As it is anticipated that certain changes may be made in the present invention without departing from the precepts herein involved, it is intended that all matter contained in the foregoing description shall be interpreted in as illustrative rather than in a limiting sense.

## Claims

1. A fire-resistant flexible hose (10) comprising:
a tubular core (14) having an exterior surface (32);
one or more reinforcement layers (40) surrounding the core (14), each of the one or more reinforcement layers comprising, independently, one or more filaments of one or more fibers; and
a firesleeve layer (50) surrounding the one or more reinforcement layers (40), the hose (10) being **characterized in that**:
a thermal insulation layer (30) is interposed between the core (14) and the one or more reinforcement layers (40), the thermal insulation layer (30) surrounding the exterior surface of the core and the one or more reinforcement layers (40) surrounding the thermal insulation layer (30), the thermal insulation layer comprising a polyimide film thermoplastic resin having a melting temperature of at least about 300°C.

2. The hose (10) of claim 1 wherein the firesleeve layer (50) comprises an ablative polymeric material.

3. The hose of claim 2 wherein the ablative polymeric material of the firesleeve layer (50) is selected from the group consisting of cross-linked silicone resins and copolymers, and combinations thereof.

4. The hose (10) of claim 1 wherein the core (14) comprises a polymeric material selected from the group consisting of fluoropolymer resins and copolymers, and combinations thereof.

5. The hose (10) of claim 1 wherein the thermoplastic resin of the thermal insulation layer (30) is selected from the group consisting of polyimide resins and copolymers, and combinations thereof.

6. The hose (10) of claim 1 wherein the thermal insulation layer (30) has a thickness of between about 5-10 mils (0.127-0.254 mm).

7. The hose (10) of claim 1 wherein the thermal insulation layer (30) is wrapped around the exterior surface of the core.

8. The hose (10) of claim 1 wherein the one or more reinforcement layers (40) each is braided, wound, woven, or knitted, independently, of the one or more filaments of one or more fibers.

9. The hose (10) of claim 1 wherein the one or more fibers comprises one or more wires, each of the wires comprising, independently, a material selected from the group consisting of metals and metal alloys, and combinations thereof.

## Patentansprüche

1. Feuerfester flexibler Schlauch (10) mit:
einem rohrförmigen Kern (14) mit einer Außenoberfläche (32),
einer oder mehreren Verstärkungsschichten (40), die den Kern (14) umgeben, wobei jede der einen oder der mehreren Verstärkungsschichten unabhängig eine oder mehrere Filamente aus einer oder mehreren Fasern aufweisen, und
einer Feuermantelschicht (50), die die eine oder die mehreren Verstärkungsschichten (40) umgibt, wobei der Schlauch (10) **dadurch gekennzeichnet ist, dass**
eine thermische Isolationsschicht (30) zwischen dem Kern (14) und der einen oder den mehreren Verstärkungsschichten (40) angeordnet ist, wobei die thermische Isolationsschicht (30) die Außenoberfläche des Kerns umgibt und wobei die eine oder die mehreren Verstärkungsschichten (40) die thermische Isolationsschicht (30) umgeben, wobei die thermische Isolationsschicht einen thermoplastischen Polyimidharzfilm aufweist mit einer Schmelztemperatur von mindestens ungefähr 300° C.

2. Schlauch (10) nach Anspruch 1, wobei die Feuermantelschicht (50) ein ablatives Polymermaterial aufweist.

3. Schlauch nach Anspruch 2, wobei das ablative Polymermaterial der Feuermantelschicht (50) ausgewählt ist aus der Gruppe, die besteht aus vernetzten Silikonharzen und Copolymeren und Kombinationen davon.

4. Schlauch (10) nach Anspruch 1, wobei der Kern (14) ein Polymermaterial aufweist, das ausgewählt ist aus der Gruppe, die besteht aus Fluoropolymerharzen und Copolymeren und Kombinationen davon.

5. Schlauch (10) nach Anspruch 1, wobei das thermoplastische Harz der thermischen Isolationsschicht (30) ausgewählt ist aus der Gruppe, die besteht aus Polyimidharzen und Copolymeren und Kombinationen davon.

6. Schlauch (10) nach Anspruch 1, wobei die thermische Isolationsschicht (30) eine Dicke zwischen ungefähr 5 bis 10 mils (0,127 bis 0,254 mm) aufweist.

7. Schlauch (10) nach Anspruch 1, wobei die thermische Isolationsschicht (30) um die Außenoberfläche des Kerns herum gewickelt ist.

8. Schlauch (10) nach Anspruch 1, wobei die eine oder die mehreren Verstärkungsschichten (40) jeweils unabhängig voneinander aus dem einen oder den mehreren Filamenten aus einer oder mehreren Fasern geflochten, gewunden, gewoben oder gestrickt sind.

9. Schlauch (10) nach Anspruch 1, wobei die eine oder die mehreren Fasern einen oder mehrere Drähte aufweisen, wobei jeder der Drähte unabhängig voneinander ein Material aufweist, das ausgewählt ist aus der Gruppe, die besteht aus Metallen und Metalllegierungen und Kombinationen davon.

## Revendications

1. Tuyau souple résistant au feu (10) comprenant :
un coeur tubulaire (14) comprenant une surface extérieure (32) ;
une ou plusieurs couches de renforcement (40) entourant le coeur (14), chacune de la ou des couches de renforcement comprenant, indépendamment, un ou plusieurs filaments d'une ou plusieurs fibres ; et
une couche de gaine résistante au feu (50) entourant la ou les couches de renforcement (40), le tuyau souple (10) étant **caractérisé en ce que** :
une couche d'isolation thermique (30) est intercalée entre le coeur (14) et la ou les couches de renforcement (40), la couche d'isolation thermique (30) entourant la surface extérieure du coeur et la ou les couches de renforcement (40) entourant la couche d'isolation thermique (30), la couche d'isolation thermique comprenant une résine thermoplastique de film polyimide ayant une température de fusion d'au moins environ 300°C.

2. Tuyau souple (10) selon la revendication 1, dans lequel la couche de gaine résistante au feu (50) comprend un matériau polymère ablatif.

3. Tuyau souple selon la revendication 2, dans lequel le matériau polymère ablatif de la couche de gaine résistante au feu (50) est choisi dans le groupe constitué par les résines de silicone et copolymères réticulés, et les combinaisons de ceux-ci.

4. Tuyau souple (10) selon la revendication 1, dans lequel le coeur (14) comprend un matériau polymère choisi dans le groupe constitué par les résines fluoropolymères et copolymères, et les combinaisons de ceux-ci.

5. Tuyau souple (10) selon la revendication 1, dans lequel la résine thermoplastique de la couche d'isolation thermique (30) est choisie dans le groupe constitué par les résines et copolymères de polyimide, et les combinaisons de ceux-ci.

6. Tuyau souple (10) selon la revendication 1, dans lequel la couche d'isolation thermique (30) a une épaisseur comprise entre 5 et 10 mils (0,127 - 0,0254 mm).

7. Tuyau souple (10) selon la revendication 1, dans lequel la couche d'isolation thermique (30) est enroulée autour de la surface extérieure du coeur.

8. Tuyau souple (10) selon la revendication 1, dans lequel la ou les couches de renforcement (40) sont toutes tressées, enroulées, tissées ou tricotées, indépendamment, à partir du ou des filaments d'une ou plusieurs fibres.

9. Tuyau souple (10) selon la revendication 1, dans lequel la ou les fibres comprennent un ou plusieurs fils, chacun des fils comprenant, indépendamment, un matériau choisi dans le groupe constitué par les métaux et alliages de métaux, et les combinaisons de ceux-ci.
